# EUROPÄISCHE PATENTSCHRIFT

(11) **EP 2 321 081 B1**
(45) Veröffentlichungstag und Bekanntmachung des Hinweises auf die Patenterteilung: **31.10.2012**
(21) Anmeldenummer: 09780119.5
(22) Anmeldetag: 03.07.2009
(51) Int. Cl.: B23D 47/04, B27B 25/10

(54) **WERKZEUGMASCHINE, INSBESONDERE TISCHKREISSÄGE**
MACHINE-TOOL, ESPECIALLY A CIRCULAR SAW BENCH
MACHINE-OUTIL, EN PARTICULIER SCIE CIRCULAIRE À TABLE

(30) Priorität: 16.07.2008 DE 102008040465
(43) Veröffentlichungstag der Anmeldung: 18.05.2011
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2009/058385
(87) Internationale Veröffentlichungsnummer: WO 2010/006931

(56) Entgegenhaltungen:
- US-A- 2 966 177
- US-A- 4 658 686
- US-A- 6 164 176

## Beschreibung

Die Erfindung betrifft eine Werkzeugmaschine, insbesondere eine Tischkreissäge, gemäß dem Oberbegriff des Anspruches 1.

### Stand der Technik

Werkzeugmaschinen mit Arbeitstischen sind in vielfältigen Ausgestaltungen bekannt. So auch als Tischkreissägen, die - zur Werkstückabstützung - mit einem Schiebeanschlag versehen sind. Ein jeweiliges Werkstück wird an den Schiebeanschlag angelegt, der längs einer unterhalb der Tischebene verlaufenden Schiebeführung geführt ist, und in Vorschubrichtung gegen das Arbeitswerkzeug, beispielsweise ein Kreissägeblatt, verfahren.

Ist das Werkstück klein, so ist ungeachtet der Verwendung des Schiebeanschlags ein Zugriff auf den Nahbereich zum Werkzeug nötig; ist das Werkstück groß, insbesondere im Vergleich zur Tischfläche, so sind vor allem in der Endphase bei über die Tischfläche hinausragendem Werkstück erhebliche Kräfte erforderlich, um das Werkstück zur Tischfläche und zum Schiebeanschlag in Anlage zu halten und ein Abkippen des Werkstückes über die bezogen auf die Vorschubrichtung vordere Tischkante zu verhindern.

Zudem ist der Benutzer gerade in dieser Arbeitsphase oft auch anderweitig gefordert, beispielsweise um Teile des mittlerweile bearbeiteten Werkstückes zusammenzuhalten und/oder die Maschine abzuschalten.

Zur Erleichterung der Handhabung großer, über den Arbeitstisch hinausragender Werkstücke ist es bekannt, den Arbeitstisch mit umfangsseitig auskragenden Werkstückabstützungen zu versehen. Der hierfür erfordliche Aufwand ist erheblich, bedingt Zusatzaufwendungen mit entsprechenden Rüstzeiten und steht dem Gedanken entgegen, mit möglichst wenig Zubehör bei minimiertem Raumbedarf auszukommen.

Aus der US 6 164 176 A ist eine als Tischkreissäge ausgebildete Werkzeugmaschine der im Oberbegriff des Anspruches 1 berücksichtigten Art bekannt. Diese weist aufliegend zur Tischfläche ein mit Halterungen für ein jeweiliges Werkstück versehenes Führungsschienensystem auf. Dieses Führungsschienensystem umfasst eine zur Sägeblattebene parallele und zur Tischfläche lagefest aufsitzende Anschlagschiene. Höhenfest zu dieser Anschlagschiene und längs derselben verschieblich ist eine Tragschienenanordnung vorgesehen. Diese umfasst zur Anschlagschiene in Vorschubrichtung des Werkstücks verschieblich verbunden eine Anschlussschiene. An dieser ist quer zur Anschlagschiene winklig anstellbar eine Tragschiene angelenkt, an der Halterungen für das jeweilige Werkstück vorgesehen sind. Über diese in Längsrichtung der Tragschiene zueinander versetzten Halterungen ist das Werkstück, in Hochrichtung zur Tischfläche abgesetzt, getragen und unter einem dem jeweiligen Anstellwinkel zwischen Anschlussschiene und Tragschiene entsprechenden Winkel gegen das Sägeblatt verfahrbar, so dass sich entsprechend der Drehlage des Werkstückes um eine zwischen den Halterungen verlaufende Drehachse und dem Anstellwinkel der Tragschiene zu Anschluss - und Anschlagschiene am Werkstück unterschiedliche Schnittebenen ergeben.

Aus der US 4 658 686 A ist bezogen auf eine Tischkreissäge eine Werkstückführungseinrichtung bekannt, über die das auf dem Arbeitstisch aufliegende Werkstück auf unterschiedliche Winkellagen zur zur Sägeblattebene parallelen Vorschubeinrichtung einstellbar ist. Die Werkstückführungseinrichtung weist hierzu eine Führungsschiene auf, die in eine in Vorschubrichtung verlaufende und zur Tischfläche offene Führungsnut des Arbeitstisches eingreift. Auf der Führungsschiene ist an deren rückwärtigem, zur Vorschubrichtung entgegengesetztem Ende ein in seiner Winkellage zur Führungsschiene, und damit zur Vorschubrichtung, einstellbarer und an das Werkstück anzulegender Schiebeanschlag vorgesehen. Die Lagefixierung der Schiebeführung zum Werkstück erfolgt über eine Spannvorrichtung, über die das Werkstück zwischen der Führungsschiene und einer Handhabungseinrichtung der Werkstückführungseinrichtung eingespannt wird, die sich ausgehend vom rückwärtigen Ende der Führungsschiene übergreifend zum Schiebeanschlag längs der Führungsschiene erstreckt.

Weiter ist aus der US 2 966 177 A bezogen auf eine Tischkreissäge als Werkzeugmaschine eine Werkstückabstützung bekannt, die eine Spannvorrichtung für das jeweils zu bearbeitende Werkstück aufweist und die mit einer auf die Tischfläche eines Arbeitstisches längsverschieblich auflegbaren Tragplatte arbeitet, die zum Arbeitstisch in Vorschubrichtung der Führungsschienen seitengeführt ist. Die Tragplatte besteht aus zwei Plattenteilen, zwischen denen ein in Vorschubrichtung verlaufender Durchgriffsspalt für das Sägeblatt gegeben ist und die starr miteinander verbunden sind. Auf der Tragplatte ist das jeweilige Werkstück über beiderseits des Durchgriffsspaltes liegende Teile der Spannvorrichtung festgelegt, wobei oberhalb des Werkstückes in Überdeckung zum Durchgriffsspalt eine geschlitzte und transparente Schutzleiste vorgesehen ist und das jeweilige Werkstück durch Relativverschiebung der Tragplatte zum Arbeitstisch in Eingriff zum Sägeblatt gebracht wird.

### Offenbarung der Erfindung

Der Erfindung liegt die Aufgabe zugrunde, eine Werkzeugmaschine der eingangs genannten Art in Bezug auf die Handhabung von Werkstücken, insbesondere in Bezug auf die Handhabung von Werkstücken unterschiedlicher Größenordnungen, und vor allem großer und schwerer Werkstücke, zu verbessern.

Gemäß der Erfindung wird dies mit den Merkmalen des Anspruches 1 erreicht. Die Unteransprüche geben zweckmäßige Weiterbildungen an.

Durch die Nutzung der Schiebeführung für eine Werkstückabstützung, die zum Werkstück tragend und insbesondere als Spannvorrichtung ausgebildet ist, ist das Werkstück in seiner Höhenlage zur Tischebene festzulegen, und zwar - solange das Werkstück in Überdeckung zur Tischfläche liegt - unabhängig von der jeweiligen Phase des Arbeitsdurchlaufes. Der Benutzer hat so, falls kein automatischer Vorschub vorgesehen ist, letztlich nur Vorschubkräfte aufzubringen und kann damit praktisch ohne Auswirkungen auf den Werkstückdurchlauf auch sonstige Funktionen wahrnehmen. Dadurch, dass das Werkstück über die Spannvorrichtung gegen die Schiebeführung tragend abgestützt ist, bedingt die Verspannung im Sinne einer Sicherung der Höhenlage des Werkstückes zur Tischebene auch kein Andrücken des Werkstücks auf die Tischebene, das in Abhängigkeit von den Reibwerten zwischen Werkstück und Tischebene und den Niedehaltekräften auch starke Schwankungen hinsichtlich der Vorschubkräfte mit sich bringen kann, die die benutzerseitige Führung erschweren.

Die benutzerunabhängige, tragende Abstützung über die Spannvorrichtung bedeutet nicht, dass das Werkstück über die Spannvorrichtung insgesamt getragen ist oder getragen sein müsste, sondern lediglich, dass die in Abhängigkeit von der Lage des Werkstückes zur Tischfläche notwendigen Spannkräfte, um beispielsweise ein Abkippen des Werkstückes von der Tischfläche zu verhindern, von der Spannvorrichtung aufgenommen und, aufgenommen von der Spannvorrichtung, über die Schiebeführung abgestützt werden. Seitens der Schiebeführung sind aber Reibwertschwankungen wie zwischen Werkstück und Tischfläche, man denke an harzverunreinigte Werkstücke, weder zu befürchten noch gegeben, so dass trotz gewisser Schwankungen die Vorschubkräfte gut zu beherrschen und insbesondere für den Benutzer auch kalkulierbar sind.

Die tragende Abstützung des Werkstücks über die Spannvorrichtung erfolgt derart, dass das Werkstück im Bereich der Spannvorrichtung zumindest gewichtsentlastet, leicht über das Niveau der Tischebene angehoben ist, was dadurch realisiert ist, dass die Spannvorrichtung mit einer zum Werkstück untergreifenden, die Tischfläche als Werkstückauflage durchsetzenden Werkstückanlage versehen ist, die in Höhe der Tischfläche benachbart zu dieser endet und damit einen kleinen Überstand zur Tischebene aufweist.

Konstruktiv lässt sich dies in vorteilhafter Weise dadurch realisieren, dass die Spannvorrichtung mit ihrer Werkstückanlage in Überdeckung zur Schiebeführung liegt, so dass bei in einem Kanalausschnitt liegender Schiebeführung ausreichender konstruktiver Freiraum für die Werkstückanlage gegeben ist.

In einfacher Weise lässt sich die Spannvorrichtung durch quer zur Tischebene einander gegenüberliegende und in ihrer Abstandslage zueinander verstellbare Spannbacken gestalten, deren untere die Werkstückanlage bildet, die in ihrer Höhenlage zur Schiebeführung sowohl lagefest wie auch verstellbar angeordnet sein kann. Eine besonders zweckmäßige Lösung besteht darin, die Spannbacken zu einer Spanneinheit zusammenzufassen, so insbesondere zu einer Spanneinheit, die nach Art einer Schraubzwinge gestaltet ist und die sich als Zusatzteil, insbesondere als Zubehör darstellen lässt, das in Zusammenwirken mit dem Werkstück-Schiebeanschlag eine Spannvorrichtung gemäß der Erfindung bildet oder das auch unabhängig hiervon als Spannzwinge einzusetzen ist.

In besonderem Maße eignen sich hierzu schraubzwingenartige Spannzwingen, deren Spannbacken über einen Spannschaft verbunden sind und von denen zumindest eine der Spannbacken, in Bezug auf den vorgesehenen Einsatzzweck in der Spannvorrichtung insbesondere die obere Spannbacke gegenüber dem Spannschaft höhenverstellbar sowie bevorzugt auch in einer Höhenlage arretierbar ist. Zweckmäßigerweise ist diese obere Spannbacke, wie auch bei anderen Ausgestaltungen der Spannvorrichtung, mit einer auf das Werkstück zugreifenden Spannschraube, oder einem entsprechenden Spannmittel versehen, das bevorzugt über ein Druckstück oder einen Druckteller das Werkstück beaufschlagt.

Im Rahmen der Erfindung liegt es auch, die Spannbacken unmittelbar gegenüber dem Werkstück-Schiebeanschlag zu verankern bzw. zu führen, quasi als Einsatzteile zum Werkstück-Schiebeanschlag auszubilden.

Weitere Vorteile und zweckmäßige Ausführungen sind den weiteren Ansprüchen, der Figurenbeschreibung und den Zeichnungen zu entnehmen. Es zeigen:
- Fig. 1: einen Arbeitstisch einer Werkzeugmaschine in Form einer Tischkreissäge in schematisierter Draufsicht, wobei der als Auflage für ein nicht dargestelltes Werkstück dienende Arbeitstisch mit einer unterhalb der Tischebene in Vorschubrichtung sich erstreckenden Schiebeführung für eine Werkstückabstützung versehen ist,
- Fig. 2: einen Schnitt gemäß Linie II-II in Fig. 1,
- Fig. 3: in Richtung des Pfeiles III in Fig. 1 eine weiter schematisierte Darstellung, in der das Werkstück im Bereich der Werkstückabstützung über eine Spannvorrichtung gehalten ist,
- Fig. 4: eine erfindungsgemäße Ausgestaltung einer solchen Spannvorrichtung, wobei die Spannvorrichtung eine schraubzwingenartige Spanneinheit umfasst, die mit dem Werkstück-Schiebeanschlag verbunden ist, in einer schematisierten Schnittdarstellung gemäß Linie IV-IV in Fig. 7,
- Fig. 5: eine Ansicht in Richtung des Pfeiles V in Fig. 4,
- Fig. 6: eine Draufsicht in Richtung des Pfeiles VI in Fig. 5,
- Fig. 7: in Draufsicht schematisiert ein Schiebeanschlag mit mehreren Aufnahmen für Spanneinheiten gemäß Fig. 4 bis 6, und
- Fig. 8: eine der Fig. 2 entsprechende Darstellung mit seitlich außerhalb der Tischfläche liegender Schiebeführung.

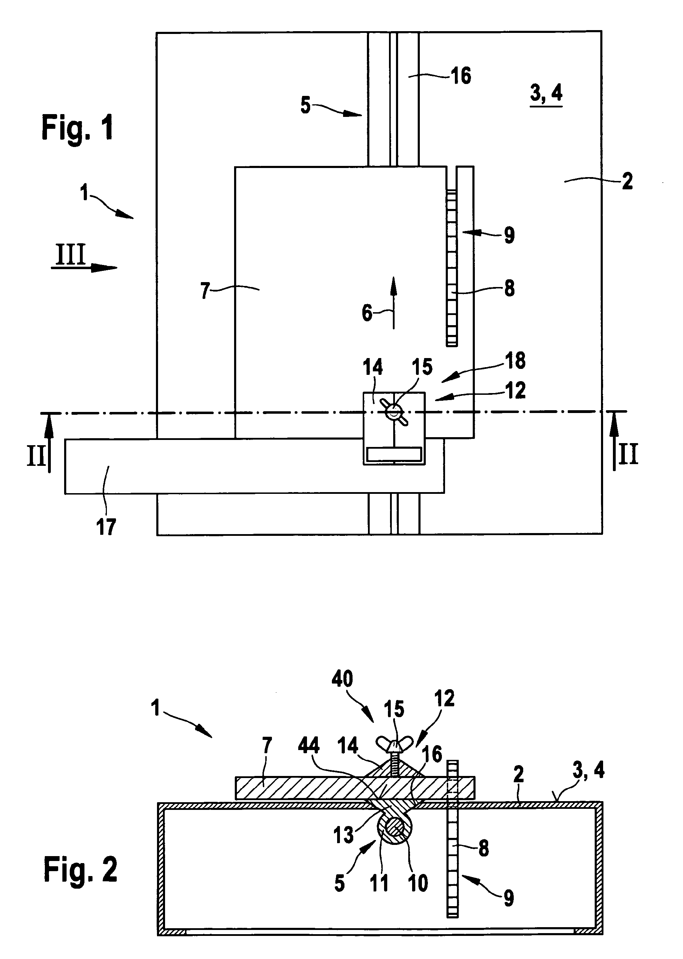

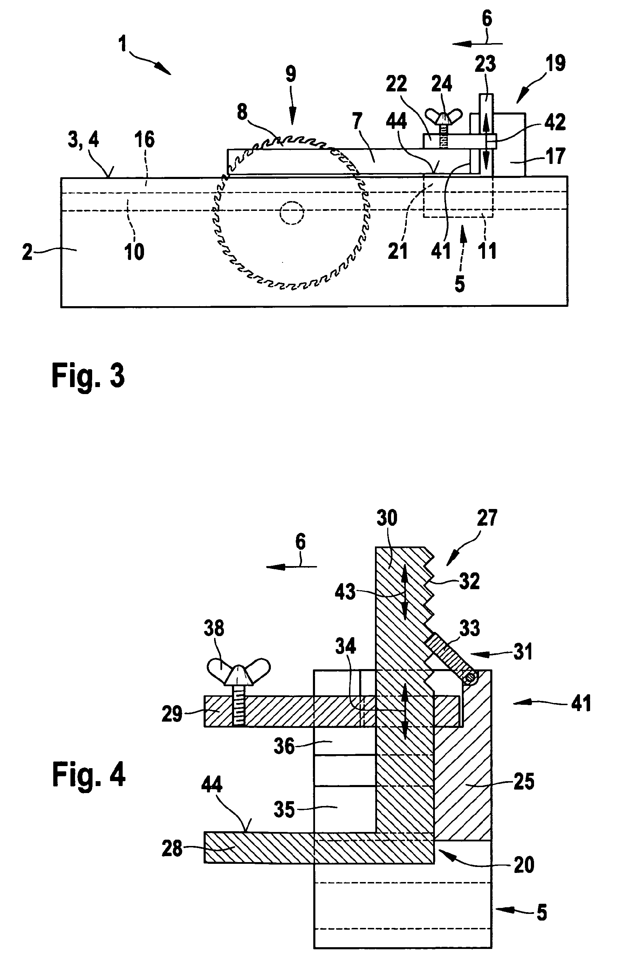

Die Fig. 1 bis 3 veranschaulichen, stark schematisiert, eine Werkzeugmaschine 1 in der Ausgestaltung als Tischkreissäge, deren Arbeitstisch 2 eine durch seine Tischfläche gebildete Werkstückauflage 3 aufweist. Unterhalb der durch die Tischfläche bestimmten Tischebene 4 ist eine Schiebeführung 5 vorgesehen. Die Schiebeführung 5 erstreckt sich in Vorschubrichtung 6 eines in Fig. 3 veranschaulichten Werkstückes 7 gegen das durch ein Sägeblatt 8 gebildete Arbeitswerkzeug 9 der Werkzeugmaschine 1 und verläuft, wie Fig. 1 und 2 zeigen, seitlich versetzt zum Sägeblatt 8, das über die Tischebene 4 nach oben übersteht und damit einen Überschneidungsbereich zum in Vorschubrichtung 6 über den Arbeitstisch 2 verschiebbaren Werkstück 7 aufweist.

Fig. 2 veranschaulicht die Schiebeführung 5 durch eine zum Arbeitstisch 2 lagefeste Führungsstange 10 und eine auf dieser laufende Führungsbuchse 11, und somit als Schiebeführung mit zwei Freiheitsgraden. Im Rahmen der Erfindung liegt es aber auch, die Schiebeführung 5 beispielsweise als Schwalbenschwanzführung mit zum Arbeitstisch lagefester Führungsschiene auszubilden, in der bei nach oben sich verjüngendem Querschnitt ein Gleitstein läuft, so dass lediglich eine Längsverschieblichkeit, und damit ein Freiheitsgrad gegeben ist.

Über die Schiebeführung 5 ist in der Darstellung gemäß Fig. 1 als Werkstückabstützung 18 eine Spannvorrichtung 12 in ihrer Höhenlage zum Arbeitstisch 2 festgelegt, welche in Fig. 2 schematisch durch zwei Spannbacken 13, 14 veranschaulicht ist, von denen die Spannbacke 13 zum Werkstück 7 eine untere, untergreifende und die Spannbacke 14 eine obere, übergreifende Spannbacke bildet. Die Spannbacken 13 und 14 sind ihrerseits, was in Fig. 1 und 2 nicht gezeigt ist, zueinander in Hochrichtung verstellbar und gegeneinander in einer auf die Dicke des Werkstückes 7 abgestimmten Höhenlage fixierbar, wobei zweckmäßigerweise, wie in Fig. 1 und 2 angedeutet, die obere Spannbacke 14 noch von einer Spannschraube 15 durchsetzt ist, die über einen in Fig. 2 nicht dargestellten Spannteller das Werkstück 7 beaufschlagt.

Die Spannvorrichtung 12 ist bezüglich ihrer Zuordnung zur Tischebene 4 so gestaltet, dass für das über die Spannvorrichtung 12 gehaltene Werkstück 7 dieses im Bereich der Spannvorrichtung 12 eine vorgegebene Höhenlage zur Tischebene 4 einnimmt und zumindest auf Höhe der Tischebene 4 unterfangen ist.

Im Bereich der Werkstückabstützung 18 ist somit das Werkstück 7 über die Spannvorrichtung 12 tragend abgestützt, ohne dass das Werkstück 7 gegen die Tischfläche als Werkstückauflage 3 angedrückt wird. Die untere Spannbacke 13, die die Werkstückanlage 44 bildet, durchsetzt, wie Fig. 2 zeigt, im Bereich des der Schiebeführung 5 zugeordneten Tischkanals 16 die durch die Tischfläche gebildete Werkstückauflage 3 und liegt mit ihrer Werkstückanlage 44 mit geringem Überstand zu Werkstückauflage 3.

Über die Spannvorrichtung 12 ist somit sichergestellt, dass das Werkstück 7 in seinem bezogen auf die Vorschubrichtung 6 hinteren Bereich in der Höhenlage fixiert ist, ungeachtet der sonstigen Abstützung und Auflage des Werkstückes 7 auf der Tischfläche, so dass auch bei einem Auslaufen des Werkstückes 7 in Vorschubrichtung 6 über die Tischfläche als Werkstückauflage 3 hinaus ein Abkippen des Werkstückes 7 verhindert ist, ohne dass seitens des Benutzers eine den Kippkräften entgegengerichtete Niederhaltekraft auf das Werkstück 7 ausgeübt werden müsste.

Als besonders zweckmäßig erweist es sich, wenn über die Schiebeführung 5 sowohl die Spannvorrichtung 12 als auch ein Schiebeanschlag 17 mit dem Arbeitstisch 2 verbunden sind, wobei der Schiebeanschlag 17 und die Spannvorrichtung 12 auch zu einer Werkstückabstützung 40 zusammengefasst sein können. Im Rahmen der Erfindung liegt es, dass die Werkstückabstützung 18 über eine dem Schiebeanschlag 17 zugeordnete Schiebeführung 5 mit dem Arbeitstisch 2 verbunden ist, oder in entsprechender Weise bei mit der Schiebeführung 5 verbundener Spannvorrichtung 12 die Werkstückabstützung 40 an der Spannvorrichtung 12 angeordnet ist, so insbesondere an deren die Werkstückanlage bildender unterer Spannbacke 13.

Die tragende Funktion der Spannvorrichtung 12 bleibt in beiden Ausgestaltungen erhalten, und ungeachtet der Abstützung des Werkstückes 7 auf der unteren Spannbacke 13 als Werkstückanlage mit entsprechend kleinem Spaltabstand zwischen Werkstück 7 und Werkstückauflage 3 als Tischfläche kann der Schiebeanschlag 17 zur Tischfläche gleitend angeordnet sein, womit bei einem rotatorischen Freiheitsgrad der Schiebeführung 5 über den Schiebeanschlag 17 eine entsprechende Ausrichtung des Schiebeanschlags 17 und der Spannvorrichtung 12 zur Werkstückauflage 3 verspannungsfrei zu erreichen ist.

In der schematisierten Darstellung gemäß Fig. 3 sind die Schiebeführung 5 und der Tischkanal 16 strichliert veranschaulicht. Ferner überlagernd zum Tischkanal 16 und zur Werkstückauflage 3 und verbunden mit der Schiebeführung 5 eine Spannvorrichtung 19, über die das Werkstück 7 an seinem bezogen auf die Vorschubrichtung 6 rückwärtigen Ende tragend gehalten ist. Die Spannvorrichtung 19 ist dem Schiebeanschlag 17 zugeordnet und ausgestaltet nach Art einer Schraubzwinge 20 mit unterer, zur Schiebeführung 5 lagefester Spannbacke 21, oberer Spannnbacke 22 und einem Spannschaft 23, zu dem die obere Spannbacke 22 in Schaftlängsrichtung verschieblich ist und zu dem die untere Spannbacke 21 lagefest angeordnet ist, so dass der Spannschaft 23 und die untere Spannbacke 21 einen Tragwinkel bilden.

Nicht dargestellt ist, dass die obere Spannbacke 22 zum Spannschaft 23 bevorzugt nicht nur durch Verkantung in einer jeweiligen Höhenlage zu fixieren ist, sondern bevorzugt auch in verschiedenen Höhenlagen durch Verrastung festzulegen ist. Die verkantende Verspannung der oberen Spannbacke 22 gegenüber dem Spannschaft 23 ergibt sich beim Anlegen der Spannschraube 24 gegen das Werkstück 7, wobei die Spannschraube 24 gegenüber der oberen Spannbacke 22 verstellbar ist und das Werkstück 7 bevorzugt über einen Spannteller oder dergleichen beaufschlagt. Fig. 3 lässt auch erkennen, dass die durch die untere Spannbacke 21 gebildete Werkstückanlage die Tischebene durchsetzt und mit geringem Abstand über der die Tischebene 4 bestimmenden Tischfläche als Werksktückauflage 3 endet, zumindest aber auf deren Höhe, so dass das Werkstück 7 bei Verspannung zwischen den Spannbacken 21 und 22 zumindest im Wesentlichen nur gegen diese und die Schiebeführung 5 verspannt ist, nicht aber gegen die Werkstückauflage 3 angedrückt ist.

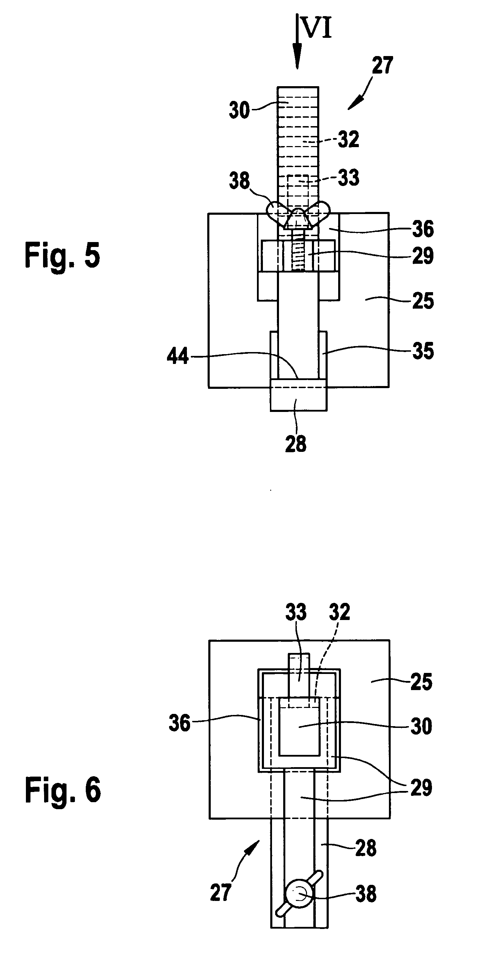

Um unterschiedlichen Gegebenheiten seitens des Werkstückes 7 Rechnung tragen zu können, erweist es sich als zweckmäßig, wenn nicht nur die Spannbacken 21, 22 gegeneinander verstellbar sind, sondern wenn zusätzlich auch die untere Spannbacke 21 durch Höhenverstellung verstellbar ist, beispielsweise durch Verstellung des Spannschaftes 23 gegenüber dem Schiebeanschlag 17 in Hochrichtung, das heißt quer zur Werkstückauflage 3. So kann auch bei ungleichmäßig geformten Werkstücken 7 an deren bezogen auf die Vorschubrichtung 6 rückwärtigem Ende eine Verspannung in Hochrichtung sichergestellt werden, die beim Auslaufen des Werkstückes 7 über die Werkstückauflage 3 hinaus ein Abkippen derselben verhindert. Dies lässt sich, wie in Fig. 4 veranschaulicht, bei an der Schiebeführung 5 angebrachtem Schiebeanschlag 25 durch Verstellung von unterer Spannbacke 28 und oberer Spannbacke 29 gegenüber dem Schiebeanschlag 25 erreichen. Ferner auch, was nicht dargestellt ist, dadurch, dass zur Schiebeführung lediglich eine Tragsäule festgelegt ist, und dass zur Tragsäule die Spannbacken verstellbar und fixierbar sind. Zusätzlich kann zur Tragsäule auch der Schiebeanschlag höhenverstellbar geführt sein; in analoger Weise ist eine solche in Hochrichtung gemäß Pfeil 42 wechselseitige Verstellbarkeit der Spannbacken und des Schiebeanschlages auch dadurch zu realisieren, dass der Schiebeanschlag zur Tragsäule in Hochrichtung verstellbar ist und die Spannbacken 28, 29 ihrerseits gegenüber dem Schiebeanschlag 46 ähnlich Fig. 4 bis 6.

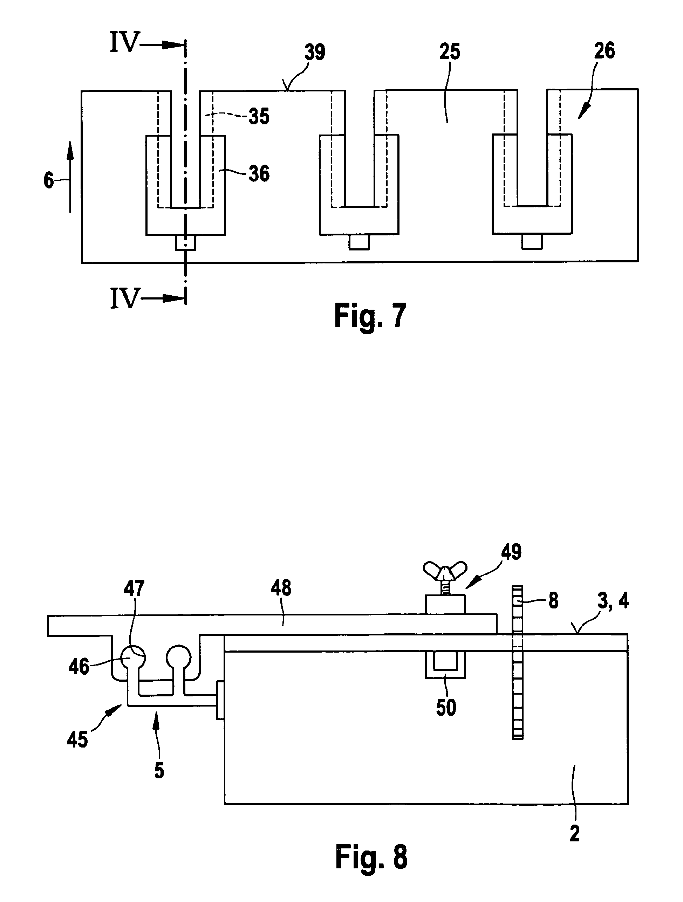

Insbesondere in der Zusammenfassung von Spannvorrichtung 27 und Schiebeanschlag 25 zu einer Werkstückabstützung 41 als Funktionseinheit ist auch die Möglichkeit begründet, einen Schiebeanschlag 25, wie in Fig. 7 angedeutet, über seine Länge mit mehreren Aufnahmen 26 für Spannvorrichtungen 27 zu versehen, wie sie beispielsweise anhand der Fig. 4 bis 6 erläutert sind. Die damit erreichbare Variabilität in der Anordnung der Spannvorrichtungen 27, insbesondere auch in deren Anordnung zu einem jeweiligen Werkstück 7 führt zu einer besonders benutzerfreundlichen Lösung, wobei zweckmäßigerweise Spannvorrichtungen 27 eingesetzt werden, die nach Art von Schraubzwingen gestaltet sind und die auch unabhängig vom erfindungsgemäßen Einsatzfall verwendet werden können. Insbesondere können gegebenenfalls auch handelsübliche Spannvorrichtungen in erfindungsgemäßer Weise mit dem Schiebeanschlag 25 zu einer Werkstückabstützung 41 zusammengefasst werden.

Anhand der Fig. 4 bis 6 ist eine solche Spannvorrichtung 27 veranschaulicht, die sowohl insgesamt zum aufnehmenden Schiebeanschlag 25 höhenverstellbar ist und bei der auch die Spannbacken 28 und 29 gegeneinander verstellbar sind, wobei die untere Spannbacke mit 28 und die obere Spannbacke mit 29 bezeichnet ist. Zum Spannschaft 30 ist die untere Spannbacke 28 lagefest, und der Spannschaft 30 ist zum Schiebeanschlag 25 in Richtung des Pfeiles 43 höhenverstellbar. Zur Einstellung einer gewünschten Höhenlage des Spannschaftes 30 dient eine Rastvorrichtung 31, angedeutet durch einen seitens des Spannschaftes 30 angedeutetes Sägezahnprofil 32 und einen Rasthebel 33.

Zum Spannschaft 30 ist die obere Spannbacke 29 ihrerseits in Richtung des Pfeiles 34 verstellbar, wobei auch insoweit gewünschte Höhenlagen zum Spannschaft 30 wiederum über eine Verrastung gesichert sein können, die analog zur Rastvorrichtung 31 ausgebildet, hier aber nicht dargestellt ist.

Die Spannbacke 28 ist zum Spannschaft 30 lagefest, wobei durch entsprechende Bemessung der seitens des Schiebeanschlages 25 vorgesehenen Ausnehmungen 35 und 36 die Verstellwege der Spannbacken 28, 29 zum Schiebeanschlag 25 in Richtung auf eine maximale Annäherungslage der Spannbacken 28, 29 gegeneinander begrenzt ist. Sind Werkstücke 7 zu haltern, deren Dicke kleiner ist als der Abstand zwischen den Ausnehmungen 35, 36, so können diesbezügliche Höhendifferenzen durch eine angedeutete Spannschraube 38 überbrückt werden.

Da Spannvorrichtungen 27 an der dem Werkstück 7 zugewandten Seite 39 des Schienenanschlages 25 eingesetzt werden können und durch die hinterschnittene Ausbildung zumindest einer der Aussparungen 35, 36 zur Seite 39 auch eine Lagesicherung erreichbar ist, wie aus den Zeichnungen ersichtlich, ist auch in der Kombination von Schiebeanschlag 25 und Spannvorrichtung 27 eine vollwertige Werkstückabstützung 41 geschaffen, ungeachtet dessen, dass die Spannvorrichtungen 27 in ihrer schraubzwingenartigen Ausgestaltung unabhängig von dem Schienenanschlag 25 auch anderweitig genutzt werden können.

Fig. 8 veranschaulicht des Weiteren, dass eine unterhalb der Tischebene 4 des Arbeitstisches 2 liegende Schiebeführung 5 nicht nur in Überdeckung zur durch die Tischfläche gebildeten Werkstückauflage 3, sondern auch randseitig zur Tischfläche liegen kann, so insbesondere seitlich außerhalb der Tischfläche liegen kann. In Fig. 8 ist hierzu seitlich auskragend zu einer Längsseite des Arbeitstisches 2 eine sowohl in Längs- und Hochrichtung führende, sowie auch quer hierzu drehmomentenabstützende Schiebeführung 45 vorgesehen, umfassend zueinander parallele Führungsstangen 46 und Führungsbuchsen 47, die zu einem Schiebeanschlag 48 lagefest sind. An dem so gegenüber dem Tisch 2 geführten Schiebeanschlag 48 können, wie anhand der übrigen Ausführungsbeispiele erläutert, Spannvorrichtungen angebracht sein, hier schematisiert angedeutet als Spannvorrichtung 49. In analoger Weise können anstelle des Schiebeanschlages 48 als Verbindung zur Schiebeführung 45 auch Teile der Spannvorrichtung 49 entsprechend den vorgeschilderten Ausführungsformen vorgesehen sein. Korrespondierend zur Spannvorrichtung 49 ist ein Kanal 50 in der Tischfläche als Werkstückauflage 3 vorgesehen.

## Patentansprüche

1. Werkzeugmaschine, insbesondere Tischkreissäge, mit einem Arbeitstisch (2) als Werkstückauflage (3) und mit einer in Vorschubrichtung (6) des Werkstückes (7) sich erstreckenden Schiebeführung (5) für eine Werkstückabstützung (18, 40, 41), wobei über die die Werkstückabstützung (18, 40, 41) tragende Schiebeführung (5) das Werkstück (7) auf eine Höhenlage zur Tischebene (4) festgelegt ist, bei der das Werkstück (7) mit Spaltabstand oberhalb der Tischebene (4) benachbart zu dieser liegt und wobei die Werkstückabstützung (18, 40, 41) eine zum Werkstück (7) untergreifende Werkstückanlage (44) und eine das Werkstück (7) gegen die Werkstückanlage (44) belastende Spannvorrichtung (12, 19, 27) aufweist, **dadurch gekennzeichnet, dass** die Schiebeführung (5) unterhalb der Tischebene (4) des Arbeitstisches (2) angeordnet ist und das Werkstück (7) über die Spannvorrichtung (12, 19, 27) in seinem bezogen auf die Vorschubrichtung (6) hinteren Bereich in seiner Höhenlage zur Tischebene (4) fixiert ist.

2. Werkzeugmaschine nach Anspruch 1, **dadurch gekennzeichnet, dass** die Spannvorrichtung (12, 19, 27) mit ihrer Werkstückanlage (44) in Überdeckung zur Schiebeführung (5) liegt und mit einer die Werkstückanlage (44) bildenden unteren Spannbacke (13, 21, 28) einen zur Schiebeführung (5) in Überdeckung liegenden Tischkanal (16) des Arbeitstisches (2) durchsetzt.

3. Werkzeugmaschine nach Anspruch 1 oder 2, **dadurch gekennzeichnet, dass** die Werkstückabstützung (18, 40, 41) als zum Werkstück (7) tragende Spannvorrichtung (12, 19, 27) ausgebildet ist, deren die Werkstückanlage (44) bildende untere Spannbacke (13, 21, 28) in ihrer Höhenlage zur Tischebene (4) einstellbar ist.

4. Werkzeugmaschine nach einem der vorhergehenden Ansprüche, **dadurch gekennzeichnet, dass** die Spannvorrichtung (12, 19, 27) eine in ihrer Höhenlage zur Tischebene (4) verstellbare obere Spannbacke (14, 22, 29) aufweist.

5. Werkzeugmaschine nach einem der vorhergehenden Ansprüche, **dadurch gekennzeichnet, dass** zum Arbeitstisch (2) ein Werkstück-Schiebeanschlag (17) vorgesehen ist und dass die Spannvorrichtung (12, 19, 27) mit dem Werkstück-Schiebeanschlag (17, 25) verbunden ist, gegenüber dem zumindest eine der Spannbacken (21, 22; 28, 29) der Spannvorrichtung (19, 27) verstellbar ist.

6. Werkzeugmaschine nach Anspruch 5, **dadurch gekennzeichnet, dass** die Spannvorrichtung (19, 27) eine schraubzwingenartig ausgebildete Spanneinheit umfasst.

## Claims

1. Machine tool, in particular circular saw bench, having a work bench (2) as workpiece rest (3) and having a sliding guide (5) for a workpiece support (18, 40, 41), which sliding guide (5) extends in the advancing direction (6) of the workpiece (7), the workpiece (7) being fixed to a height with respect to the bench plane (4) via the sliding guide (5) which carries the workpiece support (18, 40, 41), at which height the workpiece (7) lies at a gap distance above the bench plane (4), adjacently to the latter, and the workpiece support (18, 40, 41) having a workpiece attachment (44), which reaches under the workpiece (7), and a clamping apparatus (12, 19, 27) which loads the workpiece (7) against the workpiece attachment (44), **characterized in that** the sliding guide (5) is arranged below the bench plane (4) of the work bench (2), and the workpiece (7) is fixed in its height with respect to the bench plane (4) via the clamping apparatus (12, 19, 27), in its rear region in relation to the advancing direction (6).

2. Machine tool according to Claim 1, **characterized in that** the clamping apparatus (12, 19, 27) lies with its workpiece attachment (44) in congruence with the sliding guide (5) and penetrates, with a lower clamping jaw (13, 21, 28) which forms the workpiece attachment (44), a bench channel (16) of the work bench (2), which bench channel (16) lies in congruence with the sliding guide (5).

3. Machine tool according to Claim 1 or 2, **characterized in that** the workpiece support (18, 40, 41) is configured as a clamping apparatus (12, 19, 27) which is supportive with respect to the workpiece (7) and the lower clamping jaw (13, 21, 28) of which, which forms the workpiece attachment (44), can have its height with respect to the bench plane (4) set.

4. Machine tool according to one of the preceding claims, **characterized in that** the clamping apparatus (12, 19, 27) has an upper clamping jaw (14, 22, 29) which can have its height with respect to the bench plane (4) adjusted.

5. Machine tool according to one of the preceding claims, **characterized in that** a workpiece sliding stop (17) is provided with respect to the work bench (2), and **in that** the clamping apparatus (12, 19, 27) is connected to the workpiece sliding stop (17, 25), with respect to which at least one of the clamping jaws (21, 22; 28, 29) of the clamping apparatus (19, 27) can be adjusted.

6. Machine tool according to Claim 5, **characterized in that** the clamping apparatus (19, 27) comprises a clamping unit which is configured in the manner of a screw clamp.

## Revendications

1. Machine-outil, en particulier scie circulaire à table, comprenant une table de travail (2) en tant que support de pièce (3) et un guide à coulisse (5) s'étendant dans la direction d'avance (6) de la pièce (7) pour un support de pièce (18, 40, 41), la pièce (7) étant fixée à une position en hauteur par rapport au plan de la table (4) par le biais du guide à coulisse (5) portant le support de pièce (18, 40, 41), à laquelle hauteur la pièce (7) se situe avec une distance d'interstice au-dessus du plan de la table (4) en position adjacente à celui-ci, et le support de pièce (18, 40, 41) présentant un appui de pièce (44) venant en prise par le dessous avec la pièce (7) et un dispositif de serrage (12, 19, 27) sollicitant la pièce (7) contre l'appui de pièce (44), **caractérisée en ce que** le guide à coulisse (5) est disposé sous le plan de la table (4) de la table de travail (2) et la pièce (7) est fixée par le biais du dispositif de serrage (12, 19, 27) dans sa région arrière par rapport à la direction d'avance (6) dans sa position en hauteur par rapport au plan de la table (4).

2. Machine-outil selon la revendication 1, **caractérisée en ce que** le dispositif de serrage (12, 19, 27) se situe avec son appui de pièce (44) en superposition avec le guide à coulisse (5) et traverse, avec une mâchoire de serrage inférieure (13, 21, 28) formant l'appui de pièce (44), un canal de table (16) de la table de travail (2) situé en superposition avec le guide à coulisse (5).

3. Machine-outil selon la revendication 1 ou 2, **caractérisée en ce que** le support de pièce (18, 40, 41) est réalisé sous forme de dispositif de serrage (12, 19, 27) porteur par rapport à la pièce (7), dont la mâchoire de serrage inférieure (13, 21, 28) formant l'appui de pièce (44) peut être ajustée dans sa position en hauteur par rapport au plan de la table (4).

4. Machine-outil selon l'une quelconque des revendications précédentes, **caractérisée en ce que** le dispositif de serrage (12, 19, 27) présente une mâchoire de serrage supérieure (14,22, 29) réglable dans sa position en hauteur par rapport au plan de la table (4).

5. Machine-outil selon l'une quelconque des revendications précédentes, **caractérisée en ce qu'**il est prévu une butée coulissante pour pièce (17) par rapport à la table de travail (2) et **en ce que** le dispositif de serrage (12, 19, 27) est connecté à la butée coulissante pour pièce (17, 25), par rapport à laquelle au moins l'une des mâchoires de serrage (21, 22 ; 28, 29) du dispositif de serrage (19, 27) peut être réglée.

6. Machine-outil selon la revendication 5, **caractérisée en ce que** le dispositif de serrage (19, 27) comprend une unité de serrage réalisée en forme de serre-joint.
